(19) Europäisches Patentamt
European Patent Office
Office européen des brevets

(11) EP 0 489 644 B1

(12) FASCICULE DE BREVET EUROPEEN

(45) Date de publication et mention de la délivrance du brevet:
**04.09.1996 Bulletin 1996/36**

(51) Int Cl.6: **G01S 3/784**

(21) Numéro de dépôt: **91403268.5**

(22) Date de dépôt: **03.12.1991**

(54) **Dispositif pour la détermination de l'azimut et de la hauteur d'une source lumineuse**

Gerät zur Bestimmung des Azimuts und der Höhe einer Lichtquelle

Apparatus for determining the azimuth and height of a luminous source

(84) Etats contractants désignés:
**DE ES GB GR IT SE**

(30) Priorité: **03.12.1990 FR 9015094**

(43) Date de publication de la demande:
**10.06.1992 Bulletin 1992/24**

(73) Titulaire: **IMRA EUROPE S.A.**
**F-06560 Valbonne (FR)**

(72) Inventeur: **Gschwind, Michel,**
**Lotissement du Val d'Azur**
**F-06560 Valbonne (FR)**

(74) Mandataire: **Leszczynski, André**
**NONY & ASSOCIES**
**29, rue Cambacérès**
**75008 Paris (FR)**

(56) Documents cités:
**EP-A- 0 336 152**
**DE-C- 3 736 616**
**FR-A- 1 522 467**
**FR-A- 1 547 763**
**FR-A- 2 454 628**
**GB-A- 2 198 007**
**US-A- 4 767 937**
**US-H- 746**

- **PATENT ABSTRACTS OF JAPAN, vol. 5, no. 126 (P-75)[798], 14 août 1981; & JP-A-56 064 611 (NIPPON DENKI K.K.) 01-06-1981**

EP 0 489 644 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un dispositif pour la détermination de l'azimut et de la hauteur d'une source lumineuse.

On connaît déjà des dispositifs destinés à être utilisés sur des satellites pour mesurer la direction du soleil par rapport à un plan de référence. Ces dispositifs, comme celui décrit par exemple dans le document JP-A-56-64611, présentent tout d'abord l'inconvénient d'être inaptes à la mesure de deux directions telles que la hauteur et l'azimut, c'est-à-dire respectivement l'angle de la direction de la source lumineuse avec le plan horizontal, et l'angle de la projection de la direction de la source sur le plan horizontal avec la direction du nord. Par ailleurs ils sont particulièrement coûteux et complexes à mettre en oeuvre rendant leur utilisation impossible dans des domaines tels que ceux du bâtiment ou de l'automobile.

Or, il existe, notamment dans ces deux domaines, un besoin certain pour des dispositifs de détermination de la direction du soleil qui soient peu coûteux et faciles à utiliser, par exemple pour protéger l'intérieur d'un local ou d'un véhicule d'un ensoleillement direct ou pour y assurer un éclairement confortable, ou encore pour contrôler un capteur solaire à concentration.

La présente invention selon la revendication 1 vise à pallier ces inconvénients en fournissant un dispositif pour la détermination de l'azimut et de la hauteur d'une source lumineuse qui soit bon marché, réalisable en grandes séries, et facile d'utilisation.

L'invention a pour objet un dispositif pour la détermination de l'azimut et de la hauteur d'une source lumineuse, qui comprend un capteur comportant une première surface munie d'un réseau bidimensionnel de cellules photosensibles à sortie numérique disposées suivant un réseau à coordonnées polaires et une deuxième surface, opaque et disposée en vis-à-vis de la première surface, dans laquelle un orifice, également bidimensionnel, est ménagé pour former une image de la source lumineuse sur ledit réseau, les dimensions de l'orifice étant du même ordre que celles des cellules photosensibles, et des moyens de calcul pour obtenir directement l'azimut et la hauteur de la source à partir de la connaissance de la ou des cellules éclairées par la source.

On décrira maintenant à titre d'exemples non limitatifs quelques modes de réalisation particuliers de l'invention en référence aux dessins schématiques annexés dans lesquels :

- la figure 1 est une vue en coupe d'un capteur selon un premier mode de réalisation de l'invention,
- la figure 2 est une vue de dessus du réseau de cellules utilisé sur le capteur de la figure 1,
- les figures 3 à 5 sont des vues similaires à la figure 2, d'autres types de réseaux de cellules,
- les figures 6 à 8 représentent trois modes de réalisation d'un dispositif selon l'invention.

On voit sur la figure 1 un capteur 1 comportant une chambre noire 2 délimitée par quatre parois latérales 3, une paroi de fond 4 et une paroi de dessus 5. L'intérieur de la chambre noire 2 contient un milieu réfringent, d'indice n par exemple égal à 1,5.

La paroi de fond 4 est tapissée d'un réseau de cellules photosensibles 6, dans le cas présent un réseau 4 x 4. Ce réseau peut par exemple être celui commercialisé par la Société Siemens sous la référence BPX79.

La sortie de chaque cellule 6 est proportionnelle à la surface éclairée de la cellule, et l'ensemble de ces sorties est accessible par l'intermédiaire d'un connecteur 7.

La paroi de dessus 5 est opaque et est percée d'un orifice 8 qui, dans le cas présent, est un orifice circulaire centré au dessus du centre du réseau de cellules. La surface du milieu réfringent au niveau de l'orifice 8 ainsi que l'intérieur des parois latérales 3 ont subi un traitement anti-reflets.

Lorsqu'un faisceau lumineux 9 provenant d'une source, non représentée, frappe le milieu réfringent au niveau de l'orifice 8, il se réfracte en 10 et forme sur le réseau de cellules 6 une image circulaire 11 centrée au point 12 de coordonnées $x_M$ et $y_M$ comptées à partir du coin inférieur gauche du réseau tel que représenté à la figure 2.

Si l'on appelle $\alpha$ la hauteur de la source lumineuse par rapport au capteur 1, c'est-à-dire l'angle que fait le faisceau 9 avec la surface de la paroi 5 (par exemple horizontale) et $\beta$ l'azimut de la source par rapport à ce capteur, c'est-à-dire l'angle que fait la projection du faisceau 9 sur la surface de la paroi 5 avec une orientation de référence 13, on peut montrer que, en première approximation, dans le cas d'un réseau de cellules carrées interceptées par faisceau circulaire que :

$$x_M = \frac{\sum_{j=1}^{n} p_j \sum_{jj=1}^{n} I_{n\,(jj-1)+j}}{\sum_{k=1}^{n^2} I_k}$$

$$y_M = \frac{\sum_{j=1}^{n} p_j \sum_{jj=1}^{n} I_{n\,(j-1)+jj}}{\sum_{k=1}^{n^2} I_k}$$

où $I_i$ est la valeur du courant de sortie de la cellule i,

n est le nombre de lignes et de colonnes du réseau de cellules avec, dans le cas présent, n = 4,
et $p_i$ est un facteur de pondération dépendant des coordonnées de chaque cellule, avec pour la cellule i

$$P_i = \ell/2 + (i-1)(e + \ell)$$

$\ell$ étant la valeur du côté de chaque cellule 6 supposée carrée, et
e est la largeur de l'espace entre deux cellules voisines.

A titre d'exemple, on peut prendre pour rayon de l'orifice 8 la valeur

$$r = \ell/2 + e$$

et comme distance entre la paroi 5 et le réseau de cellules 6 la valeur

$$h = \frac{n\ell + (n-1)\,e - r}{2tg\left[\arcsin\left(\frac{\sin i}{n}\right)\right]}$$

si l'on souhaite optimiser h pour une valeur i de l'incidence du faisceau 9.

Cette hauteur permet d'exploiter un angle solide maximum. On peut toutefois la réduire pour augmenter la précision.

Si l'on appelle $x_0$ et $y_0$ les coordonnées du centre du réseau de cellules, on peut montrer que l'on a alors

$$\beta = \arcsin \frac{x_0 - x_M}{\sqrt{(x_0 - x_M)^2 + (y_0 - y_M)^2}}$$

$$\text{si } y_M - y_O \leq 0$$

$$\beta = \arcsin \frac{x_0 - x_M}{\sqrt{(x_0 - x_M)^2 + (y_0 - y_M)^2}} + \pi$$

si $y_M - Y_O > 0$

ainsi que

$$\alpha = \frac{\Pi}{2} - \arcsin\left[ n \times \sin\left( \mathrm{arctg} \frac{\sqrt{(x_M - x_O)^2 + (y_M - y_O)^2}}{h} \right) \right]$$

Les valeurs des sorties du capteur des figures 1 et 2 permettent par conséquent de déterminer la valeur des angles de hauteur et d'azimut de la source lumineuse.

On remarquera toutefois que la résolution angulaire dépend de la valeur de l'angle de hauteur.

On peut pallier cet inconvénient par un réseau du type de celui de la figure 3 dans lequel les dimensions des cellules diminuent en s'éloignant du centre du réseau vers sa phériphérie.

On peut en fait montrer que si l'on souhaite une variation constante de l'angle de hauteur mesuré en fonction de l'angle de hauteur réel, on doit calculer la dimension de chaque cellule en fonction de sa distance au centre du réseau de telle sorte que dD/di soit constant pour chaque angle d'incidence i avec

$$\frac{dD}{di} = h \frac{\cos i}{n\sqrt{1 - \frac{\sin^2 i}{n^2}}} \left[ 1 + tg^2\left(\arcsin\left(\frac{\sin i}{n}\right)\right) \right]$$

D étant la distance d'une cellule au centre du réseau.

Les corrections appropriées pour obtenir la variation constante désirée peuvent être obtenues outre par un agencement particulier des cellules, numériquement et/ou de manière optique en configurant de manière appropriée les parois de l'orifice et/ou en intervenant sur les caractéristiques de la couche réfringente (forme, épaisseur, indice).

La résolution du capteur peut également être augmentée à l'aide d'un réseau de cellules tel que celui de la figure 4, comportant un très grand nombre de cellules de faibles dimensions par rapport aux dimensions de l'orifice.

Dans le cas d'un capteur analogique tel que celui des figures 1 à 3, la valeur de la hauteur et de l'azimut est calculée comme précédemment.

Il est également possible d'utiliser un capteur numérique de type CCD ou réseau de photodiodes qui permet d'obtenir beaucoup plus simplement les valeurs de $x_M$ et $y_M$.

Dans le cas d'un réseau du type de celui de la figure 4 associé à un orifice dont les dimensions sont du même ordre que les dimensions des cellules individuelles, les coordonnées de l'image de la source sont directement celles de la cellule éclairée ou du petit groupe de cellules éclairées. On utilise ces coordonnées pour calculer la position de la source de la même manière que décrit précédemment.

Enfin la figure 5 montre un réseau comportant un grand nombre de cellules, ce réseau étant agencé radialement par rapport à son centre.

Dans ce cas, les valeurs de l'azimut et de la hauteur peuvent être immédiatement déduites des coordonnées radiales de la cellule éclairée ou du petit nombre de cellules éclairées.

Si l'on se réfère maintenant à la figure 6 on voit en 20 un capteur analogique comportant par exemple un réseau de cellules du type de celui de la figure 2 ou de celui de la figure 3 dont la sortie est reliée à un multiplexeur 21. La sortie analogique du multiplexeur 21 est convertie dans un convertisseur analogique-numérique 22 dont la sortie est fournie à un processeur 23 programmé pour calculer $x_M$ et $y_M$ puis les angles $\alpha$ et $\beta$ par les formules ci-dessus.

On constate qu'un tel dispositif utilise par conséquent un capteur simple mais une électronique relativement complexe et trouve par conséquent son application notamment dans des systèmes comprenant déjà un processeur de calcul.

Dans le cas de la figure 7, on utilise un capteur 25 utilisant un réseau de cellules à sortie numérique de type CCD, la sortie du capteur étant fournie à un multiplexeur 26. La sortie du multiplexeur 26 permet de déterminer en 27 les valeurs $x_M$ et $y_M$ par simple analyse numérique, ces valeurs étant fournies à un processeur 28 programmé pour calculer les angles de hauteur et d'azimut.

Enfin, la figure 8 représente un capteur 30 du type de celui représenté à la figure 5 dont la sortie numérique permet d'obtenir directement en 31 les valeurs des angles cherchés.

## Revendications

1. Dispositif pour la détermination de la position angulaire d'une source lumineuse, comprenant un capteur (7) comportant une première surface (4) munie d'un réseau bidimensionnel de cellules photosensibles (6) à sortie numérique et une deuxième surface (5), opaque et disposée en vis-à-vis de la première surface, dans laquelle un orifice (8), également bidimensionnel, est ménagé pour former une image de la source lumineuse sur ledit réseau et des moyens de calcul (31) pour déterminer la hauteur de la source à partir des sorties desdites cellules photosensibles (6), caractérisé par le fait que les cellules photosensibles (6) sont disposées suivant un réseau à coordonnées polaires, que les dimensions de l'orifice (8) sont du même ordre de grandeur que celles des cellules photosensibles (6) et que les moyens de calcul (31) sont agencés pour obtenir directement l'azimut et la hauteur de la source à partir de la connaissance de la ou des cellules éclairées par la source.

2. Dispositif selon la revendication 1, caractérisé par le fait qu'il comprend un milieu réfringent entre ledit orifice et la première surface du capteur.

3. Dispositif selon la revendication 2, caractérisé par le fait que la surface du milieu réfringent située derrière ledit orifice a subi un traitement anti-reflets.

## Patentansprüche

1. Vorrichtung zur Bestimmung der Winkelposition einer Lichtquelle, wobei die Vorrichtung die folgenden Merkmale aufweist: einen Meßgrößenaufnehmer (7) mit einer ersten Oberfläche (4), welche mit einem zweidimensionalen Rasternetz aus Photoelementen (6) mit numerischem Ausgang und einer zweiten Oberfläche (5) ausgerüstet ist, welche opak und gegenüber der ersten Oberfläche angeordnet ist, worin eine ebenfalls zweidimensionale Öffnung (8) zum Abbilden der Lichtquelle auf dem Rasternetz ausgespart ist und Mittel zum Berechnen des Einfallwinkels der (Licht)-Quelle auf Basis von Ausgängen der Photoelemente (6) vorhanden sind, dadurch gekennzeichnet, daß die Photoelemente (6) entsprechend einem Netz aus Polarkoordinaten angeordnet sind, wobei die Abmessungen der Öffnung (8) in derselben Größenordnung wie die Abmessungen der Photoelemente (6) liegen und die Mittel zum Berechnen (31) in der Weise ausgerichtet sind, daß der Azimut und die Einfallrichtung der Lichtquelle von oben auf Basis der Erkennung durch ein oder mehrere von der Quelle belichtete(s) Element(e) ermittelt werden.

2. Vorrichtung nach Anspruch 1, dadurch gekennzeichnet, daß sie zwischen der Öffnung und der ersten Oberfläche des Meßgrößenaufnehmers ein lichtbrechendes Medium aufweist.

3. Vorrichtung nach Anspruch 2, dadurch gekennzeichnet, daß die Oberfläche des hinter der Öffnung gelegenen lichtbrechenden Mediums einer Antireflexbehandlung unterzogen wurde.

## Claims

1. Device for determining the angular position of a light source, comprising a sensor (7) including a first surface (4) furnished with a two-dimensional array of photosensitive cells (6) with digital output and a second, opaque surface (5) arranged opposite the first surface, in which an orifice (8), likewise two-dimensional, is made in order to form an image of the light source on the said array and with calculating means (31) for determining the height of the source on the basins of the outputs from the said photosensitive cells (6), characterized in that the photosensitive cells (6) are arranged as a polar coordinate array, that the dimensions of the orifice (8) are of the same order of magnitude as those of the photosensitive cells (6) and that the calculating means (31) are devised so as to obtain the azimuth and height of the source directly from the knowledge of the cell or cells illuminated by the source.

2. Device according to Claim 1, characterized in that it comprises a refringent medium between the said orifice and the first surface of the sensor.

3. Device according to Claim 2, characterized in that the surface of the refringent medium which is situated behind the said orifice has undergone an anti-reflection treatment.

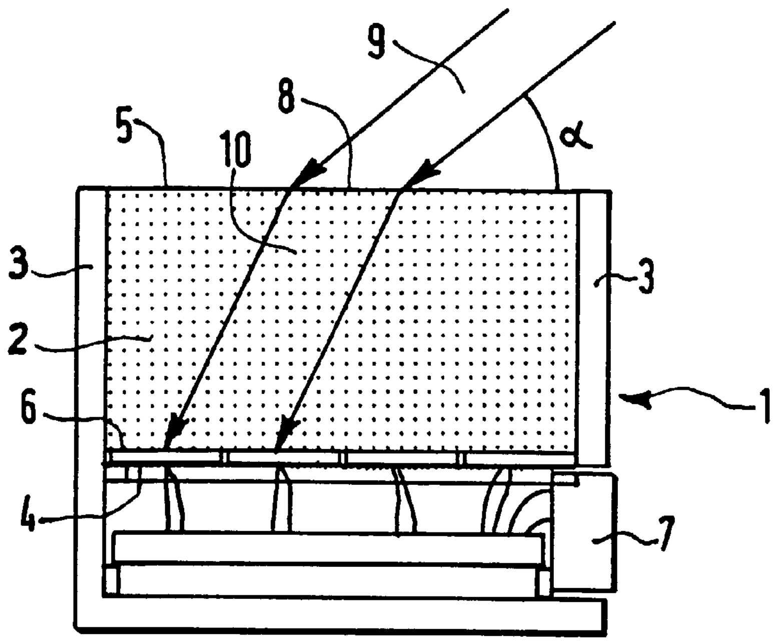


FIG.1

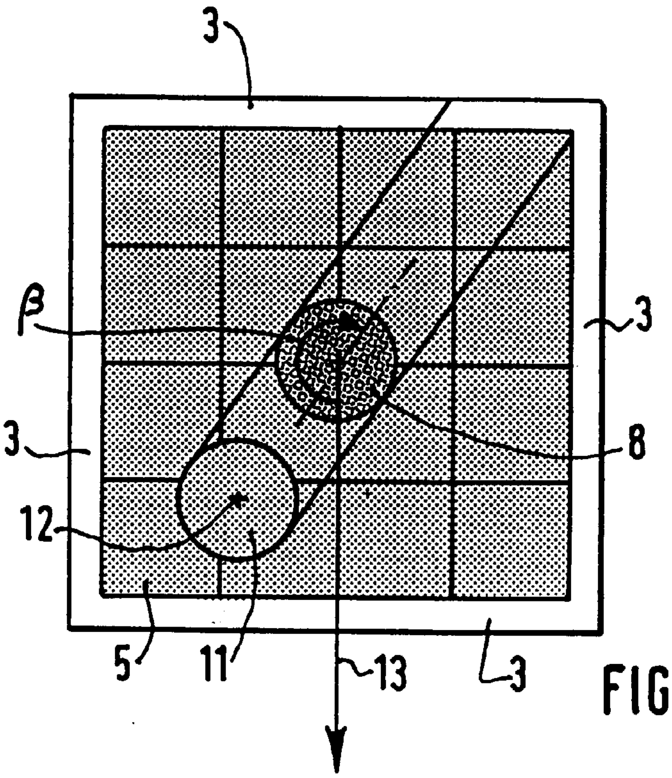


FIG.2

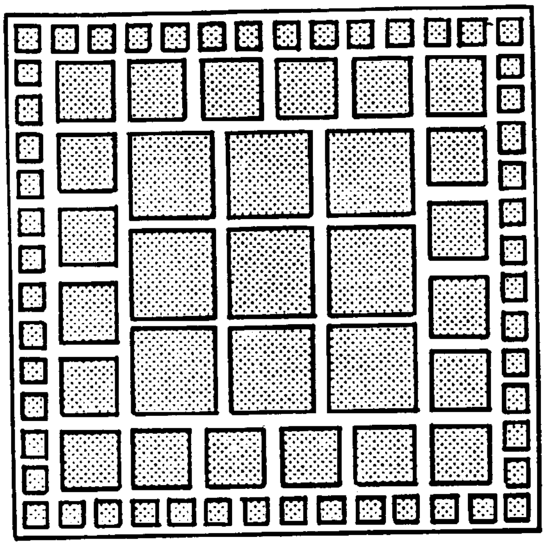

FIG.3

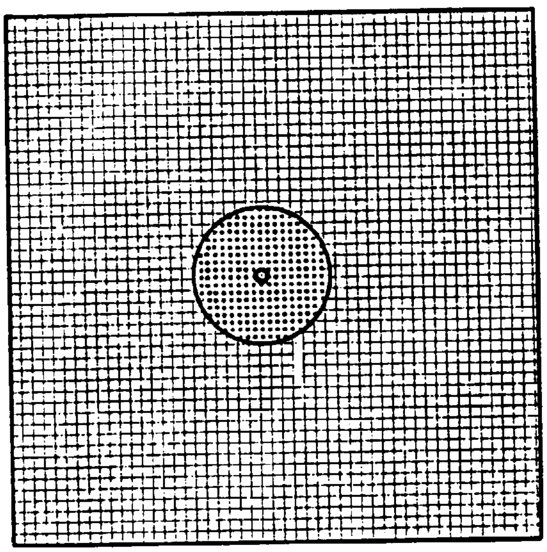

FIG.4

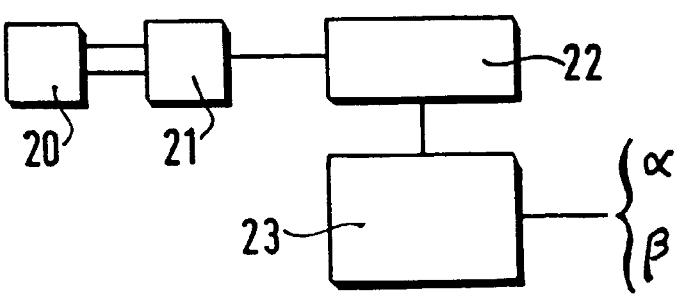


FIG.6

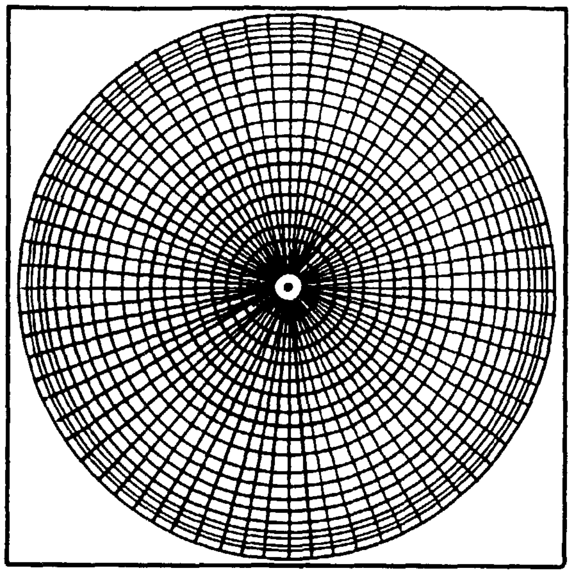

FIG. 5

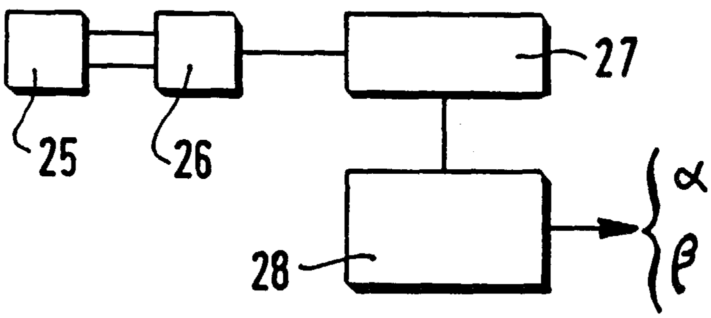


FIG. 7

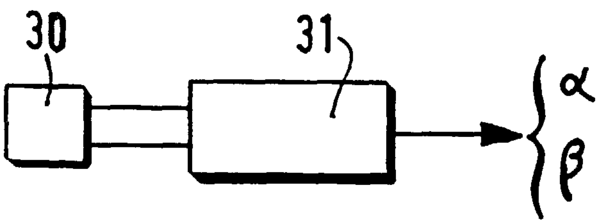


FIG. 8